# EUROPEAN PATENT APPLICATION

(11) **EP 3 046 322 A1**
(43) Date of publication of application: **20.07.2016**
(21) Application number: 15151368.6
(22) Date of filing: 16.01.2015
(51) Int. Cl.: H04N 5/335, H04N 17/00

(54) **Transmission of image data from a camera chip**

(71) Applicant: Sanofi-Aventis Deutschland GmbH, 65929 Frankfurt am Main (DE)
(72) Inventor: KLEMM, Thomas, 65926 Frankfurt am Main (DE); NESSEL, Christian, 65926 Frankfurt am Main (DE); ALLERDINGS, Alexander, 65926 Frankfurt am Main (DE)
(74) Representative: Derry, Paul Stefan

(57) **Abstract**

An apparatus includes a camera chip, including a processing arrangement to generate error detection data for image data, and a controller configured to receive the image data and error detection data, use the received error detection data to determine whether the received image data contains errors and, if so, generate an error signal. Error detection data may be generated for each row or column of image data obtained from a pixel array, to cover an entire image, and completeness of the received image data may be checked using line indicators. The error detection data may include a cyclic redundancy check (CRC) code. Error detection data may be generated and checked by the apparatus as a self-test when powered on, during normal use or as a test during manufacture. The apparatus may be configured to capture an image of a medical device and extract information such as a programmed medicament dosage.

## Description

### Field of the Invention

The present invention relates to an apparatus, system and method for in which image data for an image is captured by a sensor of a camera chip is transferred to a controller for processing.

### Background of the Invention

A variety of diseases exists that require regular treatment by injection of a medicament. Such injection can be performed by using injection devices, which are applied either by medical personnel or by patients themselves. As an example, type-1 and type-2 diabetes can be treated by patients themselves by injection of insulin doses, for example once or several times per day. For instance, a pre-filled disposable insulin pen can be used as an injection device. Alternatively, a re-usable pen may be used. A re-usable pen allows replacement of an empty medicament cartridge by a new one. Either pen may come with a set of one-way needles that are replaced before each use. The insulin dose to be injected can then for instance be manually selected at the insulin pen by turning a dosage knob and observing the actual dose from a dosage window or display of the insulin pen. The dose is then injected by inserting the needle into a suited skin portion and pressing an injection button of the insulin pen.

To be able to monitor insulin injection, for instance to prevent false handling of the insulin pen or to keep track of the doses already applied, it is desirable to measure information related to a condition and/or use of the injection device, for example, one or more of the injected insulin type, dose and timing of the injection, in a manner that is reliable and accurate.

WO2011/117212 A1 discloses an apparatus configured for releasable attachment to a medical device or for releasably receiving at least a part of the medical device, such as an injection pen. The apparatus comprises one or more optical sensors for determining information relating to a condition or use of the medical device, such as a dosage to be dispensed by the device, programmed into the device by a user.

For applications such as monitoring medicament dosages, it is important that the sensor data is obtained and processed reliably. In particular, data may become corrupted or be adversely affected by noise, particularly where data is transferred between components of an apparatus.

### Summary

According to one aspect, an apparatus includes a camera chip having a sensor configured to capture an image and provide image data corresponding to said image, a processing arrangement configured to generate error detection data for said image data and a communications interface arranged to output said image data and said error detection data, and a controller configured to receive the image data and the error detection data output from the camera chip via the communications interface, use the received error detection data to determine whether the received image data contains errors and, if it is determined that said received image data contain errors, generate an error signal.

Since error detection data can be generated on board the camera chip, errors in the data received by the controller, such as loss of data through corruption caused by poor connections within the apparatus or due to noise, can be detected. This can improve the reliability of the transfer of image data between the camera chip and the controller and, therefore, the reliability of data obtained or extracted from the image data. In addition, by checking for errors in the data and providing for generation of an error signal, a user of the apparatus can be alerted to a fault in a component of the camera chip or in a communication link between the camera chip and the controller.

In some embodiments of the apparatus, the sensor comprises a two-dimensional array of pixels and the processing arrangement is configured to generate error detection data for a plurality of groups of said pixels. Said groups of pixels may correspond to respective rows of said array. Alternatively, said groups of pixels may correspond to respective columns of said array.

The processing arrangement is configured to generate the error detection data to permit error detection across the entire captured image. For example, where the sensor comprises a two-dimensional array of pixels, the processing arrangement may be configured to generate error detection data for each row of pixels in the image or, in another embodiment, the processing arrangement may be configured to generate error detection data for each column of pixels in the image, so that error detection data is generated for the whole image captured by the sensor. By generating and checking error detection data across the whole of the captured image, an increased level of confidence in the reliability of the data received by the controller may be provided.

In other embodiments, the processing arrangement may be configured to identify a region of interest (ROI) in the image and to generate error detection data for the ROI only, in order to reduce processing resource requirements.

In some embodiments, the error detection data comprises a cyclic redundancy check (CRC) code. The number of check bits in the code may be fixed or may be variable. In other embodiments, other error detection codes or data may be used instead of, or as well as, CRC codes, such as forward error correction (FEC) codes.

The apparatus may include a serial bus arranged to transfer said image data and said error detection data output via the communications interface of the camera chip to the controller.

The controller may be configured to generate an alert based on said error signal. Such an alert may indicate to a user that a component of the camera chip requires maintenance, repair or replacement. Alternatively, or additionally, the controller may be configured to take another action, such as recording a fault in a log.

The apparatus may be configured to generate and check error detection data for an image as a self-test when it is powered on, or during normal use of the apparatus. The generation and checking of error detection data may also be performed as a test as part of a procedure for manufacturing the apparatus.

The controller may be configured to, if it is determined that the image data received by the controller does not contain errors, identify at least one character in the image using optical character recognition. For example, the apparatus may be configured to be releasably attached to, or to releasably receive a part of, a medicament delivery device such as an injector pen, and the processing arrangement configured to, based on a result of said optical character recognition, determine a medicament dose programmed into the medicament delivery device, said medicament dose being indicated by said at least one character. It is noted that this aspect also provides a system comprising such an apparatus and a medicament delivery device such as an injector pen.

According to another aspect, a method of obtaining image data includes using a sensor, provided on a camera chip, to capture an image and provide image data corresponding to said image. using a processing arrangement, provided on said camera chip, generating error detection data for said image data, outputting said image data and said error detection data, receiving, by a controller, the image data and the error detection data output from the camera chip, using the received error detection data to determine whether the received image data contains errors and, if it is determined that said received image data contain errors, generating an error signal.

In some embodiments, where the sensor includes a two-dimensional array of pixels, said generating may provide error detection data for a plurality of groups of said pixels, said groups of pixels each corresponding to one row of said array or one column of said array. In such an embodiment, the processing arrangement may be configured to output a line indicator with the error detection data for each group of pixels, wherein said line indicator identifies the group of pixels to which the error detection data corresponds, and said controller may be configured to determine whether the received image data and error detection data is complete, based on received ones of the line indicators, and to determine that the received image data contains errors if the received data and error detection data is not complete, so that an error signal can be generated. By checking for errors in the rows or columns of an image and checking that all of the image data has been received, a high level of confidence in the received image data may be attained.

Said generating may include generating error detection data to cover the entire captured image.

The error detection data may include a CRC code and/or other error detection codes.

The method may be performed to check the functioning of an apparatus during its manufacture. Alternatively, or additionally, the method may be performed as a self-test by the apparatus when it is powered on, or during normal use of the apparatus.

The method may include, if it is determined that the image data received by the controller does not contain errors, identifying at least one character in the image using optical character recognition and, based on a result of said optical character recognition, determine a medicament dose programmed into a medicament delivery device represented in said image, said medicament dose being indicated by said at least one character.

Although examples are discussed in which the above apparatus and method are used to capture an image for use in determining a medicament dosage indicated on a medicament delivery device, it is noted that apparatuses and methods according to the above aspects may be used for monitoring of operation of non-medical equipment or other applications in which reliable transfer of image data is desirable.

### Brief Description of the Drawings

Example embodiments of the present invention will now be described with reference to the accompanying figures, of which:
Figure 1 is a block diagram of a device according to an example embodiment of the present invention and a medical delivery device;
Figure 2 is a perspective view of the device of Figure 1;
Figure 3 is a perspective view of a device according to another embodiment of the present invention;
Figure 4 is a block diagram of a camera chip in the device of Figure 1; and
Figure 5 is a flowchart of a method according to an embodiment of the invention.

### Detailed Description

In the following, embodiments of the present invention will be described with reference to collecting data from an insulin injection device, such as Sanofi's SoloSTAR® pen. The present invention is however not limited to such application and may equally well be deployed with injection devices that eject other medicaments, or other types of medicament delivery devices, or in applications other than the collection of data from medicament delivery devices, including non-medical applications as noted hereinabove.

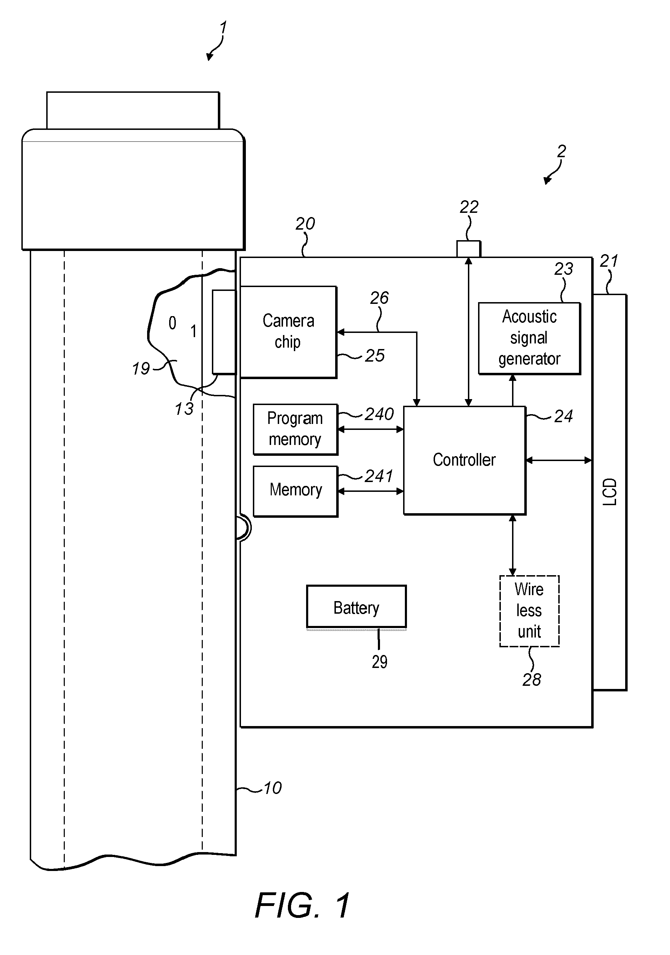

Figure 1 depicts an apparatus 2 according to an example embodiment of the present invention, arranged to collect data from an insulin injection pen 1, such as a medicament dosage as indicated by characters 19 displayed in a dosage window 13 in a housing 10 of the injection pen 1.

The apparatus 2 includes a housing 20, a controller 24 and a camera chip 25 that includes a sensor arrangement for gathering information from the injection pen 1, and an error detection data generator, to be discussed hereinbelow. The controller 24 may include one or more processors, such as a microprocessor, a Digital Signal Processor (DSP), Application Specific Integrated Circuit (ASIC), Field Programmable Gate Array (FPGA) or the like.

The controller 24 is arranged to communicate with the camera chip 25 via a communications bus 26 which, in this example, is a serial communications bus, such as a Serial Peripheral Interface (SPI) bus or an Inter-Integrated Circuit (I²C) bus. However, a parallel communications bus may be utilised in other embodiments. The bus 26 may be a component of the controller 24.

In this example, the apparatus 2 also includes a display, such as liquid crystal display (LCD) 21 or other type of display, and an acoustical signal generator 23, for presenting information to a user, memory 241, such as a Flash or Electrically Erasable Read-Only Memory (EEROM), and a non-volatile program memory 240, for example, a Flash memory or a Read-Only Memory (ROM), configured to store software to be executed by the controller, data received from the camera chip and results of processing such data. Also provided is a wireless unit 28 configured to provide a communication link between the apparatus 2 and an external apparatus, such as a computer or server, via a network. The network may be, for example, a wireless local area network, a Bluetooth® network, a cellular communications network. The apparatus 2 also includes a button 22 for switching the apparatus 2 on or off and/or activating functions such as transmitting data via the wireless unit 28, and is powered by a battery 29. The battery 29 may be a rechargeable battery.

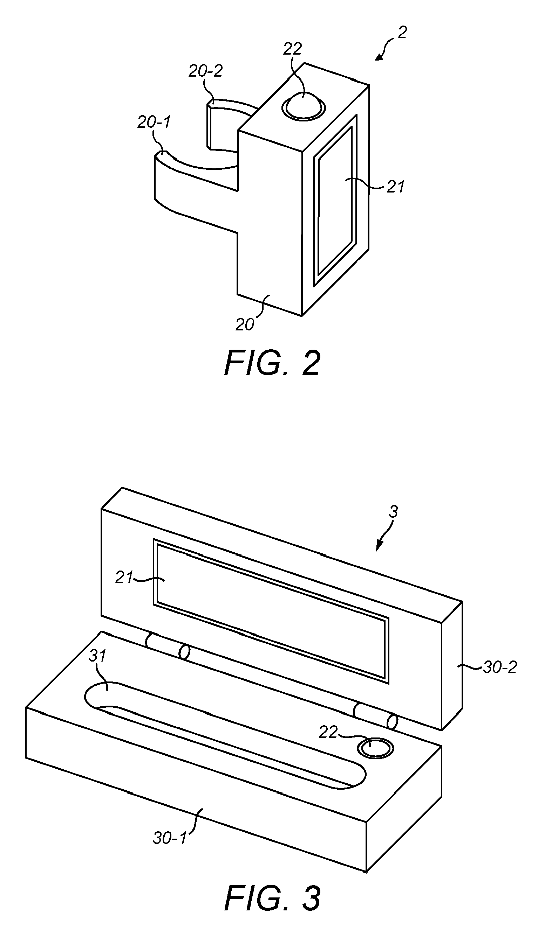

In this particular embodiment, the apparatus 2 includes clips 20-1, 20-2, shown in Figure 2, which are configured to embrace the housing 10 to releasably attach the apparatus 2 to the injection pen 1 in a position where the camera chip 25 can obtain an image that includes at least part of the dosage window 13. Alternatively, the clips 20-1 and 20-2 may for instance be replaced by a ring-shaped member, into which the upper portion of housing 10 of injection device 10 may be inserted. Figure 3 shows an apparatus 3 according to another embodiment, which includes an upper part 30-1 and a lower part 30-2 connected by hinges to form a case. One of the upper part 30-1 and the lower part 30-2 includes a recess 31 for receiving at least a part of an injection pen 1 positioned so that a camera chip (not shown) of the apparatus 3 can obtain an image that includes at least part of the dosage window 13. In the particular example shown in Figure 3, the recess 31 is configured to receive the entire injection pen 1.

The apparatus 2 may optionally include further sensors, such as a photometer (not shown) for reading barcode information on the housing 10, one or more acoustic sensors (not shown) for detecting sounds indicative of the programming of a dose into the injection pen 1 and/or administration of an injection. Other sensors that may be provided in the apparatus 2 include a colour sensor (not shown) for use in detecting colour-coded information provided on the injector pen 1, and one or more motion sensors, such as gyroscope or an acceleration sensor, for detecting movement of the injector pen 1.

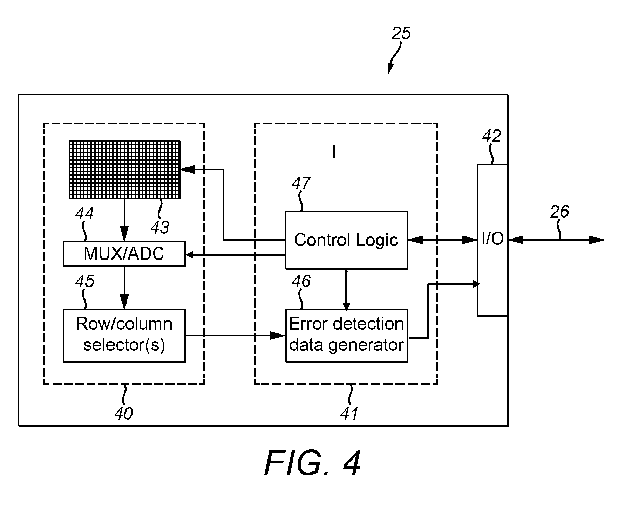

Figure 4 provides a detailed view of the camera chip 25. The camera chip 25 includes the sensor arrangement 40, mentioned herein above and a processing arrangement 41, together with a communications interface 42 arranged to provide communication to and from the camera chip 25 via the bus 26. In this example, the communications interface 42 is a SPI interface or an I²C interface, to correspond with the type of bus 26 provided in the apparatus 2. For example, the interface 42 may be a SPI slave device, where the controller 24 of the apparatus acts as the SPI master device.

It should be understood that various components of the sensor arrangement 40 and processing arrangement 41 may be implemented using hardware, software executed by the processing arrangement 41, or a combination thereof.

The sensor arrangement 40 comprises an optical sensor which, in this example, is a charge-coupled device (CCD) or a complementary metal-oxide-semiconductor (CMOS) sensor, comprising a two-dimensional array of pixels 43. In this particular example where the apparatus 2 is configured to determine a dosage displayed in the dosage window 13, an example of suitable dimensions for the array of pixels 43 is 95 pixels x 75 pixels, to yield an image of 80 pixels by 70 pixels, and 8 to 10 bits of image data may be obtained from each pixel.

The sensor arrangement 40 also includes a group 44 of one or more multiplexers and analog-to-digital converters (ADCs) for handling image data read out from the array of pixels 43 and converting said image data into digital image data.

One or more row or column selectors 45 are arranged to select and output image data from each row or column of pixels of the image in turn, together with a line indicator identifying the row or column, until image data for an entire image captured by the array of pixels 43 has been output to an error detection data generator 46 of the processing arrangement 41.

In another embodiment, the camera chip 25 may include a component (not shown) configured to select a region-of-interest (ROI) within the image data from the array of pixels 43, to reduce the amount of image data to be processed by the processing arrangement 41 and transferred via the bus 26.

The error detection data generator 46 is configured to generate error detection data for a row or column of the image data received from the one or more selectors 45 and to provide said image data, its corresponding error detection data and the line indicator to the communication interface 42 for output to the controller 24 via the bus 26. As noted above, in this embodiment, the image data output to the error detection data generator 46 covers the entire image. By providing error detection data for the whole image, or substantially the whole image, a high level of confidence in the reliability of the data may be attainable.

In this particular embodiment, control logic 47 is arranged to control the operation of the sensor arrangement 40 and the error detection data generator 46, including providing start signals for readout and conversion of data from the array of pixels 43. The control logic 47 may be a statemachine formed from a plurality of logic devices, for example using glue logic.

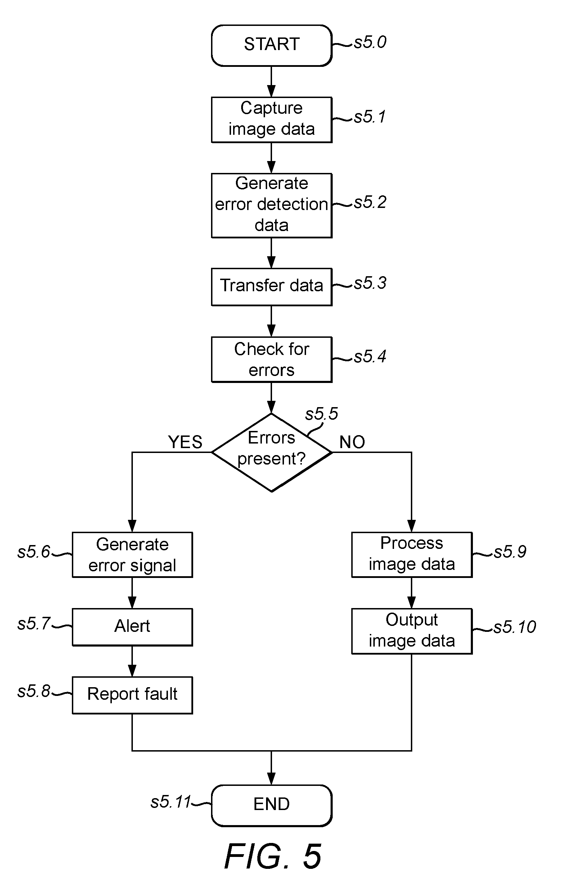

An example of a method performed by the apparatus 2 for obtaining and collecting data will now be described, with reference to Figure 5.

Starting at step s5.0, image data is captured by the array of pixels 43 of the sensor arrangement 40 (step s5.1) and converted to digital data by the group of multiplexers/ADCs 44. Then, error detection data is generated by the error detection data generator 46 for each row or column of the image data selected, in turn, by the one or more row/column selectors 45 (step s5.2).

In this particular example, the error detection data generator 46 is configured to generate a cyclic redundancy check (CRC) code for each row or column of image data. CRC codes are widely used in a number of applications and standards. To obtain a CRC code, the data for a row or column of pixels is padded with the desired number of check bits for the CRC code. In this particular example, 8 check bits are used for each row or column of image data and are initially set to zero.

The bits of the image data and the padding bits are divided by a predetermined polynomial, or "generator polynomial" that has fewer bits than the combination of the image data bits and padding. The remainder from the division is encoded in the padding bits, which now provide the CRC code in the form of check bits for that row or column of image data.

The image data and corresponding error detection data is then forwarded to the CPU 47, prepared for transmission and then transferred to the controller 24 via the bus 26 (step s5.3). The controller 24 then checks for errors in the received image data (step s5.4). The checking can be made by dividing the received image data, with the check bits append to it, by the same generator polynomial used to generate the error correction data. Since the check bits correspond to the remainder of the original division performed by the error detection data generator 46, the result of the division of the image data and check bits should be zero f the data does not contain errors. Alternatively, the controller 24 may be configured to repeat the division performed by the error data detection generator 46 by padding the image data with the required number of zero bits, dividing the padded image data by the generator polynomial and comparing the remainder of that division with the error detection data received from the camera chip 25. If the data contains no errors, the remainder should match the error detection data encoded in the check bits.

The controller 24 also checks whether data for all of the rows or columns of image data has been received as expected, based on the line indicators received from the error detection data generator 46. If the controller 24 determines that not all of the expected data has been received, an error is considered to be present.

If it is determined, by the controller 24, that errors are present (step s5.5), then the controller 24 generates an error signal (step s5.6). An alert may be generated based on the error signal (step s5.7). For example, a message may be displayed using the LCD 21 and/or an audio alert message may be generated and output by the acoustical signal generator 23. The message may indicate that the apparatus 2 is malfunctioning and that maintenance, repair or replacement is necessary.

In addition, or instead of, generating an alert (step s5.7), the apparatus may be configured to record the error as a fault in a log associated with the apparatus 2 (step s5.8).

On the other hand, if it is determined that the received image data does not contain errors (step s5.5), the image data may be processed (step s5.9) and output (step s5.10). Such processing may be performed by the controller 24 and a result output by the controller 24 using the display 21 and/or acoustical signal generator 23, or by transmitting the result to another device using the wireless unit 28. In some embodiments, depending on the application, the controller 24 may transmit the image data to another device for processing and output via the wireless unit 28.

In the particular example shown in Figure 1, where the apparatus 2 is configured to obtain an image of at least part of a dosage window 13 of an injection pen 1, the controller 24 may process the data and output a determined medicament dosage as follows.

The controller 24 may, optionally, perform pre-processing to assess and, if required, improve image data quality by correcting for defective pixels, variations in light level or incorrect exposure, distortion or jitter. Another optional measure would be to correct for slanting of the characters 19 displayed in the dosage window, since slanted numbers are sometimes used in such devices for ease of recognition by a user but may be more difficult for the controller 24 to decode.

The controller 24 then attempts to recognise characters from the image, using Optical Character Recognition (OCR) software in order to determine a number or other dosage indication displayed in the dosage window 13.

Optionally, the OCR process includes binarization, to produce a black and white image of the character(s) displayed in the dosage window 13 based on a predetermined threshold for defining black and white levels. For example, where an image contains 256 grey levels, a threshold value of 127 may be suitable, although a variable threshold may be more useful if light correction has not been performed in pre-processing of the image data.

The next step in the OCR process is segmentation to determine the exact location of each visible or partly visible character in the image. The controller 24 may accomplish this by performing horizontal and vertical projections to identify rows and columns with zero, or almost zero, black pixels, in order to locate edges of characters in the image. The memories 240, 241 of the apparatus 2 may be pre-programmed with the expected height (in pixel rows) of a full character, for use by the controller 24 when detecting the presence of partially visible characters in the image.

Next, one or more of the visible characters is selected, for example, the character or characters having the greatest height. pattern matching in order to identify at least one character in the image and position calculation to determine the location of the at least one character in the dosage window 13 and to determine the displayed medicament dosage accordingly. A pattern matching process is then performed to identify the selected characters. For example, templates for each number 19 may be pre-programmed into one of the memories 240, 241 of the apparatus 2, so that the controller 24 may compare the identified characters to these templates. The comparison may be made on a pixel-by-pixel basis, or using a feature recognition process or a vector comparison process, for example. Once the selected character or characters have been successfully identified, a weighting function is applied in order to determine a dose dialled into the injection device 1. The weighting function may be formulated based on the vertical position of the selected character(s) relative to the centre of the dosage window 13. This may be done by calculating the offset of the middle pixel row comprising the primary digit row relative to a pixel row representing a centre line of the dosage window 13 in the image. The offset therefore allows for determining the rotational position of the number relative to the sensor. If the central pixel row of the selected character(s) is the same as the central pixel row of the image, then the offset is zero and the displayed dosage is indicated by the selected character(s). However, there is likely to be some offset in most circumstances. Since the distance, in pixel rows, between successive numbers should be constant, the expected height of the character(s) and spaces between characters indicating different dosage levels and information regarding the type of numerical sequence used to indicated dosages in the injector pen 1 may be pre-programmed into the memories 240, 241 of the apparatus 2 to assist in medicament dosage determination.

Information regarding the type of medication may be obtained by one or more of using OCR from a part of the image including medicament type information, extracting and interpreting a barcode from a part of the image or by identifying a colour of a part of the injection device 1 that indicates the medicament type from the image. In embodiments where colour detection is used, the background of the dosage window 13 may be configured to provide reference colour information to allow one or more colours in the image to be identified correctly.

In another embodiment, the image data is transmitted to another device, via the wireless unit 28, and an analysis to determine the medicament dosage is performed by the other device. The other device may employ a similar OCR method to analyse the image as described above.

The display 21 of the apparatus 2 may be configured simply to display a part of the image captured by the camera chip 25, in order to show the dosage to a user, instead of, or as well as, displaying the results of an analysis. The display of the image on the display 25 allows the analysis of the image data to determine the medicament dosage and/or the transmission of image data to another device to be deferred, if required.

The process ends at step s5.11.

The apparatus may be configured to generate and check error detection data for an image, in the manner described above with reference to steps s5.1 to s5.8 of Figure 5, as a self-test when it is powered on, or during normal use of the apparatus. The generation and checking of error detection data may also be performed as a test as part of a procedure for manufacturing the apparatus.

While the above examples are based on CRC codes, other types of error detection data can be used instead of, or as well as, CRC codes. For example, in another embodiment, the error detection generator 46 may be configured to generate forward error correction (FEC) codes. It is noted that it is not necessary for the controller 24 to try to use the error detection data to correct the image data if errors are found. Therefore, the error detection data used in embodiments need only to be suitable for detecting errors, rather than correcting them.

While the embodiments above have been described in relation to collecting data from an insulin injector pen, it is noted that embodiments of the invention may be used for other purposes, such as monitoring of injections of other medicaments or other medical processes. Embodiments may also be used to for non-medical purposes, for example, in monitoring the operation of other types of equipment for safety reasons, or for other applications in which reliable transmission of image data is desirable.

## Claims

1. An apparatus comprising:
a camera chip having:
a sensor configured to capture an image and provide image data corresponding to said image;
a processing arrangement configured to generate error detection data for said image data; and
a communications interface arranged to output said image data and said error detection data; and
a controller configured to:
receive the image data and the error detection data output from the camera chip via the communications interface;
use the received error detection data to determine whether the received image data contains errors; and
if it is determined that said received image data contain errors, generate an error signal.

2. An apparatus according to claim 1, wherein:
said sensor comprises a two-dimensional array of pixels;
said processing arrangement is configured to generate error detection data for a plurality of groups of said pixels; and
said groups of pixels each correspond to one row of said array or one column of said array.

3. An apparatus according to claim 2, wherein:
said processing arrangement is configured to output a line indicator with the error detection data for each group of pixels, wherein said line indicator identifies the group of pixels to which the error detection data corresponds; and
said controller is configured to determine whether the received image data and error detection data is complete, based on received ones of the line indicators, and to determine that the received image data contains errors if the received data and error detection data is not complete.

4. An apparatus according to claim 1, 2 or 3, wherein the processing arrangement is configured to generate the error detection data to permit error detection across the entire captured image.

5. An apparatus according to any of the preceding claims, wherein said error detection data comprises a cyclic redundancy check code or a forward error correction code.

6. An apparatus according to any preceding claim, comprising a serial bus arranged to transfer said image data and said error detection data output via the communications interface of the camera chip to the controller.

7. An apparatus according to any preceding claim, configured to generate an alert based on said error signal.

8. An apparatus according to any preceding claim, wherein the controller is configured to, if it is determined that the image data received by the controller does not contain errors, identify at least one character in the image using optical character recognition.

9. An apparatus according to claim 8, configured to be releasably attached to, or to releasably receive a part of, a medicament delivery device, wherein the processing arrangement is configured to, based on a result of said optical character recognition, determine a medicament dose programmed into the medicament delivery device, said medicament dose being indicated by said at least one character.

10. A system comprising:
an apparatus according to claim 9; and
said medicament delivery device;
wherein said medicament delivery device is an injector pen.

11. A method of obtaining image data, comprising:
using a sensor, provided on a camera chip, to capture an image and provide image data corresponding to said image;
using a processing arrangement, provided on said camera chip, generating error detection data for said image data;
outputting said image data and said error detection data;
receiving, by a controller, the image data and the error detection data output from the camera chip;
using the received error detection data to determine whether the received image data contains errors; and
if it is determined that said received image data contain errors, generating an error signal.

12. A method according to claim 11, wherein:
said sensor comprises a two-dimensional array of pixels; and
said generating comprise generating error detection data for a plurality of groups of said pixels, said groups of pixels each corresponding to one row of said array or one column of said array.

13. A method according to claim 11 or 12, wherein said generating comprises generating error detection data to cover the entire captured image.

14. An method according to claim 11, 12 or 13, wherein said error detection data comprises a cyclic redundancy check code.

15. A method according to any of claims 11 to 14, comprising:
if it is determined that the image data received by the controller does not contain errors, identifying at least one character in the image using optical character recognition; and
based on a result of said optical character recognition, determine a medicament dose programmed into a medicament delivery device represented in said image, said medicament dose being indicated by said at least one character.
